# EUROPEAN PATENT SPECIFICATION

(11) **EP 3 696 154 B1**
(45) Date of publication and mention of the grant of the patent: **21.08.2024**
(21) Application number: 17928474.0
(22) Date of filing: 09.10.2017
(51) Int. Cl.: C05D 9/02, C05F 11/00, C05F 11/08, C05F 11/10

(54) **FOLIAR FERTILISER AND USE OF SAME**
BLATTDÜNGEMITTEL UND SEINE VERWENDUNG
ENGRAIS FOLIAIRE ET SON UTILISATION

(43) Date of publication of application: 19.08.2020
(73) Proprietor: Fertinagro Biotech, S.L., 44195 Teruel (ES)
(72) Inventor: ATARES REAL, Sergio, 44195 Teruel (ES); ROMERO LOPEZ, Joaquin, 44195 Teruel (ES); NARANJO OLIVERO, MiguelAngel, 44195 Teruel (ES); SALAET MADORRAN, Ignasi, 44195 Teruel (ES); FERRER GINES, María, 44195 Teruel (ES); YANCE CHAVEZ, Tula del Carmen, 44195 Teruel (ES); ALIGUE ALEMANY, Rosa, 44195 Teruel (ES)
(74) Representative: González López-Menchero, Álvaro Luis
(86) International application number: PCT/ES2017/070657
(87) International publication number: WO 2019/073092

(56) References cited:
- WO-A1-2013/141815
- WO-A1-2015/085115
- WO-A1-99/43632
- WO-A1-99/43632
- CN-A- 103 992 966
- US-A- 5 512 069

## Description

The present invention relates to a foliar fertiliser.

More specifically, the invention provides a foliar fertiliser for application to aerial parts of plants which includes an extract of methylotrophic microorganisms. The foliar fertiliser of the invention enhances the nitrogen-fixing capacity of the plant.

Additionally, the foliar fertiliser of the invention can be used as a single fertiliser or in combination with any other chemical or organic foliar fertiliser, avoiding the need to fertilise at different times, since the mixture with other foliar fertilisers does not affect the effect of enhanced nitrogen-fixing activity of the application of the fertiliser of the invention. Similarly, the fertiliser of the invention does not lose its nitrogen-fixing enhancing activity when applied in combination with other agricultural products, such as other fertilisers, pesticides or fungicides.

The growth of all plants is determined directly or indirectly by the availability of mineral nutrients, especially nitrogen. Once water needs are met, the most important limiting factor is nitrogen. A plant with nitrogen deficiency would suffer chlorosis, exhibiting a yellowish colour in stems and leaves, underdevelopment and weakness. On the contrary, when the plant has enough nitrogen, its leaves and stems grow quickly. In agriculture, nitrogen is the main nutrient for plant growth and, thus, in soils lacking in nitrogen crop yields are low.

Furthermore, nitrogen is an essential element for the growth of all microorganisms, being present in the atmosphere in the form of N₂ in a proportion of approximately 80 %. However, due to the nature of the bond between the two nitrogen atoms, its reactivity is practically zero, which means that it is not assimilable by most living organisms.

There is a group of microorganisms which are capable of taking advantage of this nitrogen through a process known as biological nitrogen fixation which, broadly speaking, consists of converting atmospheric nitrogen into metabolisable forms that can be assimilated by living beings, in particular ammonium forms, nitrites and nitrates.

Global nitrogen needs in agriculture amount to 150-200 million tonnes per year ("Measuring plant-associated nitrogen fixation in agricultural systems", Australian Center for International Agricultural Research, 2008, Unkovich, et al.). Of these, 120 million tonnes/year are currently applied as fertiliser in agriculture; the rest, 50-70 million tonnes/year, come from nitrogen fixation by plant-associated microorganisms ("Global nitrogen and phosphorus fertiliser use for agriculture production in the past half century: shifted hot spots and nutrient imbalance", Earth system Science Data, 2017, Chaoqun Lu, et al.). Until recently, it was believed that these microorganisms were concentrated mostly in plant roots, where they interact in different ways:
a. Strict symbiosis: for example, bacteria of the genus *Rhizobium* form nodules in the roots of leguminous plants.
b. Non-nodulating endophytes: which penetrate the roots of the plant and live in the intercellular spaces thereof, which is where they carry out their symbiotic relationship with the plant by fixing nitrogen. Bacteria of the genera *Bacillus, Pseudomonas, Novosphingobium* and *Ochrobactrum,* inter alia, belong to this group.
c. Epiphytes: These bacteria colonise the surface of the roots, which is where they carry out nitrogen fixation, Bacteria of the genera *Azotobacter* and *Azospirillum* belong to this group.

J. Prella et al. ("Legumes regulate Rhizobium bacteroid development and persistence by the supply of branched-chain amino acids", J. Prella, J. P. Whiteb, A. Bourdesa, S. Bunnewella, R. J. Bongaertsc, and P.S. Poolea, edited by Sharon R. Long, Stanford University, Stanford, CA, 2009) report that, once inside the plant, the endophytic bacteria become auxotrophic for the branched amino acids leucine, isoleucine and valine. It is believed that this is the plant's way of controlling its relationship with said microorganisms. EM Lodwig et al. also report that in order for these microorganisms to fix nitrogen, it is very important that the plant provides them with reasonable quantities of the two amino acids directly involved in the ammonium fixation cycle, which are glutamic acid and asparagine ("Amino-acid cycling drives nitrogen fixation in legume-Rhizobium symbiosis", E.M. Lodwig, et al., Nature, 2003).

Also well known is the need for different microelements and how they influence the capacity of these symbiotic microorganisms to fix nitrogen. For example, it is known that molybdenum and iron form part of nitrogenase, an enzyme that catalyses the reduction of N₂. It is also known that boron is necessary for the nodulation of Rhizobium and that zinc and manganese are part of superoxide dismutase, an enzyme that protects against oxidative stress. Furthermore, copper is part of a special cytochrome c necessary to breathe in the low oxygen conditions in which nitrogen fixation takes place. Lastly, it is known that nickel is a cofactor of hydrogenase, an enzyme that processes the hydrogen generated in nitrogen fixation, and cobalt is part of cobalamin, an essential cofactor for some enzymes indirectly involved in nitrogen fixation.

It is now known that these methylotrophic microorganisms not only inhabit the radicular part of the plants, but are able to move through the plant and colonise the stems and leaves and carry out nitrogen-fixing functions there ("Ascending Migration of Endophytic Rhizobia, from Roots to Leaves, in Rice Plants and Assessment of Benefits to Rice Growth Physiology", Applied and Environmental Microbiology, Nov. 2005, Feng Chi, et al.).

Certain studies confirm that the nitrogen fixation carried out in the aerial parts of the plant can represent up to 60 % of total fixation, therefore being the main fixation site ("Activation of Nitrogen-Fixing Endophytes Is Associated with the Tuber Growth of Sweet Potato", Koyo Yonebayashi, et al., Mass Spectrom (Tokyo). 2014; 3(1): A0032.).

Furthermore, Frank Keppler, et al. ("Methane emissions from terrestrial plants under aerobic conditions", Frank Keppler et al.), Nature 439, 187-191, 2006) report that plants emit non-negligible amounts of methane and methanol into the atmosphere through their leaves and the existence of leaf-residing bacteria capable of degrading these compounds is also known since the 1980s (Methanol-utilizing bacteria associated with green plants, Dev. Ind. Microbiol. 1982; 23: 483-493. Corpe W.A., Basile D.V.9).

It can also be observed that, under certain conditions, methanol or methane consumption is associated with greater nitrogen fixation ("Methanotrophy induces nitrogen fixation during peatland development", Tuula Larmolaa, et al., edited by Sarah Hobbie, University of Minnesota, Saint Paul, MN, 2013), Specific microorganisms have also been described, such as the genus Methylobacterium, inhabitants of the phyllosphere and methane and methanol consumers that directly fix atmospheric nitrogen ("Leaf-residing Methylobacterium species fix nitrogen and promote biomass and seed production in Jatropha curcas", Munusamy Madhaiyan et al., Biotechnology for Biofuels, 2015 8: 222).

The effect of the foliar application of methylotrophic microorganisms is also well known and there is abundant literature describing the increase in production in different crops achieved through the application of different doses of methylotrophic microorganisms to leaves or seeds. In this regard, see for example patent documents US 6174837 B1, US 5512069, EP 1173543 A or international patent applications WO 2001034777 A1, WO 2013141815 A1, and WO9943632 A1.

The main disadvantage of the use of live microorganisms as a fertiliser is the difficulty of co-application with other fertilisers due to the sensitivity of the microorganisms to the different chemicals used as fertilisers, as well as with fungicides or pesticides. Thus, farmers are forced to prepare an additional independent fertiliser in order to apply the fertilising microorganisms so they are not affected by the other components of the fertiliser or pesticide.

The aim of the present invention is to address this drawback of fertilisers that include live microorganisms by providing a foliar fertiliser that includes an extract of methylotrophic microorganisms, wherein the live methylotrophic microorganisms are previously subjected to a fermentation process using methanol as the only carbon source or energy and then subjected to a process that includes the stages of cell disruption by physical, chemical or enzymatic methods, separating the soluble parts from the insoluble parts by means of tangential filtration or centrifugation and, optionally, concentrating by means of filtration or atomisation.

In the present invention, the term "extract of methylotrophic microorganisms" shall be understood to mean the permeate obtained after the fermentation process and subsequent cell disruption, separation and concentration as mentioned earlier. Similarly, "fermentation" shall be understood to mean any type of multiplication of the microorganism under controlled conditions to obtain an increase in the biomass of the microorganism itself.

In the context of the invention, the term "foliar fertiliser" refers to any organic or inorganic composition, natural or synthetic, which provides plants with one or more of the nutritional elements essential for the normal plant development thereof, usually primary macroelements (N, P, K), secondary macroelements (Ca, Mg, S) and microelements (B, Cl, Co, CU, Fe, Mn, Mo and Zn). Thus, the term "fertiliser" particularly encompasses simple mineral fertilisers (contained in only one of the following macroelements: nitrogen, phosphorus or potassium) and complex mineral fertilisers (contained in more than one of the following macroelements: nitrogen, phosphorus or potassium), organic fertilisers, organominerals, etc., such as P fertilisers, K fertilisers, N fertilisers, NP fertilisers, PK fertilisers, NK fertilisers or NPK fertilisers, and whose application is foliar, i.e. on the aerial part of the plants, whether in solution if it is a solid fertiliser or directly or diluted if it is a liquid fertiliser.

This extract of methylotrophic microorganisms is capable of increasing the nitrogenase activity of leaf-residing microorganisms while preventing its application from being affected by co-application with other fertilisers, fungicides or pesticides or combinations thereof.

Thus, the object of the invention is a foliar fertiliser that includes an extract of methylotrophic microorganisms obtained from a first initial process of fermenting living methylotrophic microorganisms using methanol as the only source of carbon or energy and a second process that includes the stages of cell disruption by physical, chemical or enzymatic methods, separating the soluble parts from the insoluble parts by means of tangential filtration or centrifugation and, optionally, concentrating by means of filtration or atomisation.

Methylotrophic microorganisms in the present invention are understood to be methylotrophic bacteria or yeasts, bacteria such as Methylobacterium, Methylobacillus, Methylophilus, Methylovorus, Methylomonas, Sphingomonas, Curtobacterium, Pseudomonas, Bacillus, Enterobacter or yeasts such as Pichia pastoris.

In a preferred embodiment, the methylotrophic microorganisms are selected between Methylobacterium and Bacillus, in particular between Methylobacterium radiotolerans and Bacillus methylotrophicus.

As regards the initial process of fermenting methylotrophic microorganisms using methanol as the only source of carbon or energy, the fermentation conditions depend essentially on each organism selected, although, generally speaking, the following could be applied, for example, for Methylobacterium: Choi culture medium (Choi J, Kim J, Daniel M, Lebeault J (1989) "Optimization of growth medium and poly-β-hydroxybutyric acid production from methanol in Methylobacterium organophilum", Kor J Appl Microbiol Bioeng 17: 392-396) with a concentration of 1 % methanol, which is kept constant by means of a probe-pump system; pH 6.75, temperature of 30 °C, 80 hours; agitation at 800 rpm under a continuous air stream. For this specific microorganism and these conditions, between 80 and 115 g of biomass are obtained per litre of fermentation broth.

As regards the method of cell disruption by physical, chemical or enzymatic methods, the use of chemical methods is preferred, in particular chemical extraction using non-ionic detergents, such as IGEPAL^{®} or TWEEN 20^{®}, applied at 0.1 %, followed by sonication at 4 kW at a flow rate between 100 and 800 l/h.

The separation of the soluble parts from the insoluble parts is carried out by means of centrifugation or tangential filtration, preferably by tangential filtration using ceramic filters with a pore size between 400 and 750 nm.

The extract of methylotrophic microorganisms thus obtained is rich in essential antioxidants for the use of methanol, such as ergothioneine, glutathione and mycothiols, as well as in specific enzymatic cofactors essential for the enzymatic processing of methanol, such as pyrroloquinoline quinones (PQQ) and tetrahydromethanopterins (H4MPT).

Also an object of the invention is the use of the described foliar fertiliser, which includes an extract of methylotrophic microorganisms obtained from a first initial process of fermenting methylotrophic microorganisms using methanol as the only source of carbon or energy and a second process that includes the stages of cell disruption by physical, chemical or enzymatic methods, separating the soluble parts from the insoluble parts by means of tangential filtration or centrifugation and, optionally, concentrating by means of filtration or atomisation, on the aerial parts of a plant, alone or in combination with other fertilisers, pesticides or fungicides.

In one embodiment, the fertiliser of the invention is used together with 25 % cypermethrin as a pesticide at a rate of 100 cm³/Ha and/or with 43 % tebuconazole as a fungicide at a rate of 400 cm³/Ha.

Although the amount of the foliar fertiliser of the invention to be applied depends essentially on the type of crop or plant to which it is applied, it is preferably applied so as to have a content of extract of microorganisms as described above from 500 to 1,000 grams per hectare.

In one embodiment, the application of the fertiliser of the invention is carried out together with another fertiliser that includes amino acids selected from the group consisting of isoleucine, leucine, valine, glutamic acid or asparagine, with the aim of favouring plant leaf-residing methylotrophs and providing amino acids that are directly involved in the nitrogen cycle.

In another embodiment, the application of the fertiliser of the invention is carried out together with another fertiliser that includes microelements selected from the group consisting of boron, nickel, zinc, manganese, molybdenum, cobalt, iron and copper, improving the nitrogen-fixing capacity of the methylotrophic microorganisms residing on the plant.

In another embodiment, the application of the fertiliser of the invention is carried out together with an antioxidant selected from the group consisting of ascorbic acid or caffeic acid. The application of the fertiliser of the invention together with antioxidants favours the nitrogen fixation process, which is very sensitive to oxygen and protects leaf-residing microorganisms, since, on being directly exposed to sunlight, they can be subject to oxidative stress. In a preferred embodiment, the proportion of antioxidant to be used with respect to the fertiliser is less than 2 % by weight.

Similarly, in another embodiment, the application of the fertiliser of the invention is carried out together with a wetting agent in order to improve wettability, facilitate the penetration of the fertiliser of the invention in the treated plant tissues and provide greater resistance to washing away by rain water. Preferably, the proportion of wetting agent to be used with respect to the fertiliser ranges between 0.5 % and 20 % by weight. In a preferred embodiment, glycerin is used as a wetting agent.

### Examples

The invention is explained below on the basis of illustrative and nonlimiting examples of embodiment.

### Example 1:

Different fertiliser products are obtained that include Methylobacterium radiotolerans, as shown in Table 1 below (a, b, c, d, e, f, g, h, i, j). Water is used as a control. These products are applied by means of foliar application to a wheat crop. After 7 days, foliar mass is collected from each of the cultures and the nitrogenase activity is measured by means of acetylene reduction assays.

The nitrogenase enzyme has been shown to not be very specific, i.e. not only is it capable of reducing N₂ to NH₄, but it also non-specifically reduces other chemical compounds such as 2H+ to H₂; N₂O to N₂; H₂O and CN⁻ to CH₄ and NH₃, and, lastly, it is also capable of reducing C₂H₂ to C₂H₄ (Burris, 1991).

For the acetylene reduction assays, plant leaves are collected at the end of the day so that they are full of photosynthates and the speed at which x grams of leaf are able to reduce C₂H₂ to C₂H₄ is quantified in µmol/hour as an indirect measurement of the activity of the nitrogenase enzyme. Lastly, the reaction speed to grams of leaf in dry matter is measured. The assay must be conducted within 60 minutes post-collection to avoid underestimations of activity.
a) Control treatment (water).
b) Methylobacterium radiotolerans (live) applied to 1·10¹⁵ UFC/Ha by means of foliar application.
c) Methylobacterium radiotolerans extract produced in a culture medium with glucose as a source of carbon and applied to 500 g/Ha by means of foliar application.
d) Methylobacterium radiotolerans extract produced in a culture medium with methanol as a source of carbon and applied to 500 g/Ha by means of foliar application.
e) Methylobacterium radiotolerans applied to 1·10¹⁵ UFC/Ha + fungicide (43 % tebuconazole) at a rate of 400 cm³/Ha by means of foliar application.
f) Methylobacterium radiotolerans extract produced in a culture medium with glucose as a source of carbon and applied to 500 g/Ha + fungicide (43 % tebuconazole) at a rate of 400 cm³/Ha by means of foliar application.
g) Methylobacterium radiotolerans extract produced in a culture medium with methanol as a source of carbon and applied to 500 g/Ha + fungicide (43 % tebuconazole) at a rate of 400 cm³/Ha by means of foliar application.
h) Methylobacterium radiotolerans (live) applied to 1·10¹⁵ UFC/Ha + pesticide (25 % cypermethrin) at a rate of 100 cm³/Ha by means of foliar application.
i) Methylobacterium radiotolerans extract produced in a culture medium with glucose as a source of carbon and applied to 500 g/Ha + pesticide (25 % cypermethrin) at a rate of 100 cm³/Ha by means of foliar application.
j) Methylobacterium radiotolerans extract produced in a culture medium with methanol as a source of carbon and applied to 500 g/Ha + pesticide (25 % cypermethrin) at a rate of 100 cm³/Ha by means of foliar application.

**Table 1**

| Nitrogenase Activity | (µmol C₂H₄/g MS dry·h) | | |
|---|---|---|---|
| Negative Control | a | | |
| | 35 ± 7 | | |
| Treatment with Methylobacterium radiotolerans | b | c | d |
| | 97 ± 12 | 51 ± 6 | 82 ± 14 |
| Treatment with Methylobacterium radiotolerans + tebuconazole | e | f | g |
| | 31 ± 9 | 47 ± 6 | 86 ± 8 |

| Nitrogenase Activity | (µmol C₂H₄/g MS dry·h) | | |
|---|---|---|---|
| Treatment with Methylobacterium radiotolerans + cypermethrin | h | i | j |
| | 64 ± 9 | 53 ± 3 | 92 ± 12 |

As can be observed in the table above, it is evidenced that mixing live Methylobacterium radiotolerans with the different fungicide and pesticide compounds eliminates the positive effect of its application. However, this effect does not occur with the application of the Methylobacterium radiotolerans extract. The results obtained also show that the application of a Methylobacterium radiotolerans extract produced using a source of carbon other than methanol does not have the same effect as the extract from a culture of the same microorganism produced with methanol as a source of carbon.

### Example 2:

Different fertiliser products that include Bacillus methylotrophicus are obtained, as shown in Table 2 below (a, b, c, d, e, f, g, h, i, j). Water is used as a control. These products are applied by means of foliar application to a wheat crop. After 7 days, foliar mass is collected from each of the cultures and the nitrogenase activity is measured by means of acetylene reduction assays.
a) Control treatment (water).
b) Bacillus methylotrophicus (live) applied to 1·10¹⁵ UFC/Ha by means of foliar application.
c) Bacillus methylotrophicus extract produced in a culture medium with glucose as a source of carbon and applied to 500 g/Ha by means of foliar application.
d) Bacillus methylotrophicus extract produced in a culture medium with methanol as a source of carbon and applied to 500 g/Ha by means of foliar application.
e) Bacillus methylotrophicus (live) applied to 1·10¹⁵ UFC/Ha + urea (fertiliser) at a rate of 31 Kg/Ha by means of foliar application.
f) Bacillus methylotrophicus extract produced in a culture medium with glucose as a source of carbon and applied to 500 g/Ha + urea (fertiliser) at a rate of 31 Kg/Ha by means of foliar application.
g) Bacillus methylotrophicus extract produced in a culture medium with methanol as a source of carbon and applied to 500 g/Ha + urea (fertiliser) at a rate of 31 Kg/Ha by means of foliar application.
h) Bacillus methylotrophicus (live) applied to 1·10¹⁵ UFC/Ha + Iron chelated by (ortho-ortho)-EDDHA (fertiliser) 3.5 % at a dose of 165 grams/cm and diluting the product in water to 0.1 %.
i) Bacillus methylotrophicus extract produced in a culture medium with glucose as a source of carbon and applied to 500 g/Ha + Iron chelated by (ortho-ortho)-EDDHA (fertiliser) 3.5 % at a dose of 165 grams/cm and diluting the product in water to 0.1 %.
j) Bacillus methylotrophicus extract produced in a culture medium with methanol as a source of carbon and applied to 500 g/Ha + Iron chelated by (ortho-ortho)-EDDHA (fertiliser) 3.5 % at a dose of 165 grams/cm and diluting the product in water to 0.1 %.

**Table 2**

| Nitrogenase Activity | (µmol C₂H₄/g MS dry·h) | | |
|---|---|---|---|
| Negative Control | a | | |
| | 83 ± 14 | | |
| Treatment with Bacillus methylotrophicus | b | c | d |
| | 214 ± 27 | 118 ± 11 | 182 ± 12 |
| Treatment with Bacillus methylotrophicus + urea (fertiliser) | e | f | g |
| | 147 ± 21 | 101 ± 15 | 172 ± 8 |
| Treatment with Bacillus methylotrophicus + Fe-EDDHA (fertiliser) | h | i | j |
| | 164 ± 4 | 105 ± 7 | 178 ± 25 |

As can be observed in the table above, it is evidenced that mixing live Bacillus methylotrophicus with the different fertilisers significantly reduces the positive effect of its application. However, this effect does not occur with the application of the Bacillus methylotrophicus extract. The results obtained also show that the application of a Bacillus methylotrophicus extract produced using a source of carbon other than methanol does not have the same effect as an extract from a Bacillus methylotrophicus culture produced with methanol as a source of carbon.

### Example 3:

Different fertiliser products that include Bacillus methylotrophicus are produced, as shown in Table 3 below (a, b, c, d, e, f, g, h, i, j). Water is used as a control. These products are applied by means of foliar application to a tomato crop. After 7 days, foliar mass is collected from each of the cultures and the nitrogenase activity is measured by means of acetylene reduction assays.
a) Control treatment (water).
b) Bacillus methylotrophicus applied to 1·10¹⁵ UFC/Ha by means of foliar application.
c) Bacillus methylotrophicus extract produced in a culture medium with glucose as a source of carbon and applied to 500 g/Ha by means of foliar application.
d) Bacillus methylotrophicus extract produced in a culture medium with methanol as a source of carbon and applied to 500 g/Ha by means of foliar application.
e) Bacillus methylotrophicus (live) applied to 1·10¹⁵ UFC/Ha + 0.2 % boric acid (micronutrient) at a rate of 1,000 l/Ha by means of foliar application.
f) Bacillus methylotrophicus extract produced in a culture medium with glucose as a source of carbon and applied to 500 g/Ha + 0.2 % boric acid (micronutrient) at a rate of 1,000 l/Ha by means of foliar application.
g) Bacillus methylotrophicus extract produced in a culture medium with methanol as a source of carbon and applied to 500 g/Ha + 0.2 % boric acid (micronutrient) at a rate of 1,000 l/Ha by means of foliar application.
h) Bacillus methylotrophicus (live) applied to 1·10¹⁵ UFC/Ha + 0.6% manganese sulfate (micronutrient) at a rate of 100 l/Ha by means of foliar application.
i) Bacillus methylotrophicus extract produced in a culture medium with glucose as a source of carbon and applied to 500 g/Ha + 0.6 % manganese sulfate (micronutrient) at a rate of 100 l/Ha by means of foliar application.
j) Bacillus methylotrophicus extract produced in a culture medium with methanol as a source of carbon and applied to 500 g/Ha + 0.6 % manganese sulfate (micronutrient) at a rate of 100 l/Ha by means of foliar application.

**Table 3**

| Nitrogenase Activity | (µmol C₂H₄/g MS dry·h) | | |
|---|---|---|---|
| Negative Control | a | | |
| | 71 ± 7 | | |
| Treatment with Bacillus methylotrophicus | b | c | d |
| | 185 ± 27 | 97 ± 9 | 195 ± 14 |
| Treatment with Bacillus methylotrophicus + boric acid (micronutrient) | e | f | g |
| | 83 ± 11 | 91 ± 17 | 158 ± 8 |
| Treatment with Bacillus methylotrophicus + manganese sulfate (micronutrient) | h | i | j |
| | 145 ± 19 | 93 ± 12 | 184 ± 9 |

As can be observed in the table above, it is evidenced that mixing live Bacillus methylotrophicus with the different micronutrients significantly reduces the positive effect of its application. However, this effect does not occur with the application of the Bacillus methylotrophicus extract. The results obtained also show that the application of a Bacillus methylotrophicus extract produced using a source of carbon other than methanol does not have the same effect as an extract from a Bacillus methylotrophicus culture produced with methanol as a source of carbon.

## Claims

1. A foliar fertiliser, **characterised in that** it includes an extract of methylotrophic microorganisms obtained from a first initial process of fermenting live methylotrophic microorganisms using methanol as the only source of carbon or energy and a second process that includes the stages of cell disruption by physical, chemical or enzymatic methods, separating the soluble parts from the insoluble parts by means of tangential filtration or centrifugation and, optionally, concentrating by means of filtration or atomisation.

2. The foliar fertiliser, according to claim 1, **characterised in that** the methylotrophic microorganisms are selected between Methylobacterium and Bacillus.

3. The foliar fertiliser, according to claim 2, **characterised in that** the methylotrophic microorganisms are selected between Methylobacterium radiotolerans and Bacillus methylotrophicus.

4. The foliar fertiliser, according to claim 1, **characterised in that** the cell rupture method is chemical extraction using non-ionic detergents applied at 0.1 % followed by sonication at 4 kW at a flow rate between 100 and 800 l/h.

5. The foliar fertiliser, according to claim 1, **characterised in that** the separation of the soluble parts from the insoluble parts is carried out by tangential filtration using ceramic filters with a pore size between 400 and 750 nm.

6. Use of the foliar fertiliser, according to claims 1 to 5, alone or in combination with other fertilisers, pesticides and/or fungicides.

7. The use of the foliar fertiliser, according to claim 6, together with another fertiliser that includes amino acids selected from the group consisting of isoleucine, leucine, valine, glutamic acid or asparagine.

8. The use of the foliar fertiliser, according to claim 6 or 7, together with another fertiliser that includes microelements selected from the group consisting of boron, nickel, zinc, manganese, molybdenum, cobalt, iron and copper.

9. The use of the foliar fertiliser, according to claim 6, together with cypermethrin as a pesticide.

10. The use of the foliar fertiliser, according to claim 6 or 9, together with tebuconazole as a fungicide.

11. The use of the foliar fertiliser, according to claims 6 to 10, together with an antioxidant.

12. The use of the foliar fertiliser, according to claim 11, wherein the antioxidant is selected from the group consisting of ascorbic acid or caffeic acid.

13. The use of the foliar fertiliser, according to claim 11 or 12, wherein the proportion of antioxidant to be used with respect to the fertiliser is less than 2 % by weight.

14. The use of the foliar fertiliser, according to claims 6 to 13, together with a wetting agent.

15. The use of the foliar fertiliser, according to claim 14, wherein the wetting agent is glycerin.

16. The use of the foliar fertiliser, according to claim 14 or 15, wherein the proportion of wetting agent with respect to the fertiliser ranges between 0.5 % and 20 % by weight.

## Patentansprüche

1. Blattdünger, **dadurch gekennzeichnet, dass** er einen Extrakt aus methylotrophen Mikroorganismen einschließt, der aus einem ersten anfänglichen Prozess der Fermentation lebender methylotropher Mikroorganismen unter Verwendung von Methanol als einziger Kohlenstoff- oder Energiequelle und einem zweiten Prozess erhalten wurde, der die Phasen des Zellaufschlusses durch physikalische, chemische oder enzymatische Verfahren, des Trennens der löslichen Teile von den unlöslichen Teilen durch Tangentialfiltration oder Zentrifugation und gegebenenfalls des Konzentrierens durch Filtration oder Zerstäubung einschließt.

2. Blattdünger nach Anspruch 1, **dadurch gekennzeichnet, dass** die methylotrophen Mikroorganismen aus Methylobacterium und Bacillus ausgewählt sind.

3. Blattdünger nach Anspruch 2, **dadurch gekennzeichnet, dass** die methylotrophen Mikroorganismen aus Methylobacterium radiotolerans und Bacillus methylotrophicus ausgewählt sind.

4. Blattdünger nach Anspruch 1, **dadurch gekennzeichnet, dass** das Zellaufschlussverfahren eine chemische Extrahierung unter Verwendung nichtionischer Detergenzien ist, die in einer Menge von 0,1 % angewendet werden, gefolgt von einer Beschallung mit 4 kW bei einer Durchflussrate zwischen 100 und 800 L/h.

5. Blattdünger nach Anspruch 1, **dadurch gekennzeichnet, dass** die Trennung der löslichen Teile von den unlöslichen Teilen durch Tangentialfiltration unter Verwendung von Keramikfiltern mit einer Porengröße zwischen 400 und 750 nm durchgeführt wird.

6. Verwendung des Blattdüngers nach Anspruch 1 bis 5, allein oder in Kombination mit anderen Düngern, Pestiziden und/oder Fungiziden.

7. Verwendung des Blattdüngers nach Anspruch 6 zusammen mit einem anderen Dünger, der Aminosäuren einschließt, die aus der Gruppe ausgewählt sind, die aus Isoleucin, Leucin, Valin, Glutaminsäure oder Asparagin besteht.

8. Verwendung des Blattdüngers nach Anspruch 6 oder 7 zusammen mit einem anderen Dünger, der Mikroelemente einschließt, die aus der Gruppe ausgewählt sind, die aus Bor, Nickel, Zink, Mangan, Molybdän, Kobalt, Eisen und Kupfer besteht.

9. Verwendung des Blattdüngers nach Anspruch 6 zusammen mit Cypermethrin als Pestizid.

10. Verwendung des Blattdüngers nach Anspruch 6 oder 9 zusammen mit Tebuconazol als Fungizid.

11. Verwendung des Blattdüngers nach Anspruch 6 bis 10 zusammen mit einem Antioxidans.

12. Verwendung des Blattdüngers nach Anspruch 11, wobei das Antioxidans aus der Gruppe ausgewählt ist, die aus Ascorbinsäure oder Kaffeesäure besteht.

13. Verwendung des Blattdüngers nach Anspruch 11 oder 12, wobei der Anteil des zu verwendenden Antioxidans im Verhältnis zum Dünger weniger als 2 % Gewichtsprozent beträgt.

14. Verwendung des Blattdüngers nach Anspruch 6 bis 13 zusammen mit einem Netzmittel.

15. Verwendung des Blattdüngers nach Anspruch 14, wobei das Netzmittel Glycerin ist.

16. Verwendung des Blattdüngers nach Anspruch 14 oder 15, wobei der Anteil des Netzmittels im Verhältnis zum Dünger im Bereich zwischen 0,5 % und 20 % Gewichtsprozent liegt.

## Revendications

1. Engrais foliaire, **caractérisé en ce qu'**il inclut un extrait de micro-organismes méthylotrophes obtenu à partir d'un premier processus initial de fermentation de micro-organismes méthylotrophes vivants utilisant le méthanol comme seule source de carbone ou d'énergie et un second processus qui inclut les étapes de rupture cellulaire par des méthodes physiques, chimiques ou enzymatiques, séparation des parties solubles des parties insolubles au moyen d'une filtration tangentielle ou d'une centrifugation et, optionnellement, concentration par filtration ou atomisation.

2. Engrais foliaire, selon la revendication 1, **caractérisé en ce que** les microorganismes méthylotrophes sont choisis entre Méthylobacterium et Bacillus.

3. Engrais foliaire, selon la revendication 2, **caractérisé en ce que** les microorganismes méthylotrophes sont choisis entre Méthylobacterium radiotolerans et Bacillus methylotrophicus.

4. Engrais foliaire, selon la revendication 1, **caractérisé en ce que** la méthode de rupture cellulaire est une extraction chimique à l'aide de détergents non ioniques appliqués à 0,1 % suivie d'une sonication à 4 kW à un débit compris entre 100 et 800 l/h.

5. Engrais foliaire, selon la revendication 1, **caractérisé en ce que** la séparation des parties solubles des parties insolubles est réalisée par filtration tangentielle à l'aide de filtres céramiques ayant une taille de pores comprise entre 400 et 750 nm.

6. Utilisation de l'engrais foliaire, selon les revendications 1 à 5, seul ou en combinaison avec d'autres engrais, pesticides et/ou fongicides.

7. Utilisation de l'engrais foliaire, selon la revendication 6, conjointement avec un autre engrais qui inclut des acides aminés sélectionnés dans le groupe constitué par l'isoleucine, la leucine, la valine, l'acide glutamique ou l'asparagine.

8. Utilisation de l'engrais foliaire, selon la revendication 6 ou 7, conjointement avec un autre engrais qui inclut des microéléments sélectionnés dans le groupe constitué par le bore, le nickel, le zinc, le manganèse, le molybdène, le cobalt, le fer et le cuivre.

9. Utilisation de l'engrais foliaire, selon la revendication 6, conjointement avec de la cyperméthrine comme pesticide.

10. Utilisation de l'engrais foliaire, selon la revendication 6 ou 9, conjointement avec du tébuconazole comme fongicide.

11. Utilisation de l'engrais foliaire, selon les revendications 6 à 10, conjointement avec un antioxydant.

12. Utilisation de l'engrais foliaire, selon la revendication 11, dans laquelle l'antioxydant est choisi dans le groupe constitué par l'acide ascorbique ou l'acide caféique.

13. Utilisation de l'engrais foliaire, selon la revendication 11 ou 12, dans laquelle la proportion d'antioxydant à utiliser par rapport à l'engrais est inférieure à 2 % en poids.

14. Utilisation de l'engrais foliaire, selon les revendications 6 à 13, conjointement avec un agent mouillant.

15. Utilisation de l'engrais foliaire, selon la revendication 14, dans laquelle l'agent mouillant est la glycérine.

16. Utilisation de l'engrais foliaire, selon la revendication 14 ou 15, dans laquelle la proportion d'agent mouillant par rapport à l'engrais est comprise entre 0,5 % et 20 % en poids.
